Europäisches Patentamt

European Patent Office

Office européen des brevets

(19)

(11) **EP 0 570 673 B1**

(12) **EUROPÄISCHE PATENTSCHRIFT**

(45) Veröffentlichungstag und Bekanntmachung des Hinweises auf die Patenterteilung:
**28.08.1996 Patentblatt 1996/35**

(51) Int Cl.6: **H01L 41/09**

(21) Anmeldenummer: **93103457.3**

(22) Anmeldetag: **04.03.1993**

(54) **Wanderwellenmotor zum Betrieb mit unterschiedlichen Schwingungsformen**

Travelling wave motor operating at different vibration modes

Moteur à ondes progressives fonctionnant en modes de vibrations différents

(84) Benannte Vertragsstaaten:
**ES FR GB IT**

(30) Priorität: **16.05.1992 DE 4216273**

(43) Veröffentlichungstag der Anmeldung:
**24.11.1993 Patentblatt 1993/47**

(73) Patentinhaber: **Daimler-Benz Aktiengesellschaft**
**D-70546 Stuttgart (DE)**

(72) Erfinder:
• **Wallaschek, Jörg, Dr.-Ing.**
**W-4790 Paderborn (DE)**
• **Schöner, Hans-Peter, Dr.-Ing.**
**W-6101 Modautal 3 (DE)**

(74) Vertreter: **Vogl, Leo, Dipl.-Ing.**
**AEG Aktiengesellschaft**
**D-60591 Frankfurt (DE)**

(56) Entgegenhaltungen:
**EP-A- 0 413 111          US-A- 4 562 374**

• **PATENT ABSTRACTS OF JAPAN vol. 14, no. 401 (E-971)30. August 1990 & JP-A-2151 278**

**Beschreibung**

Die Erfindung bezieht sich auf einen Wanderwellenmotor gemäß dem Oberbegriff des Patentanspruchs 1.

Aus der US-PS 4562374 ist ein Ultraschallmotor bekannt, bei dem in einem Stator aus elastischem Material Ultraschalloszillatoren mechanische Wellen anregen, die in eine Dreh- oder Linearbewegung eines Rotors umgewandelt werden. Im Unterschied zu herkömmlichen Elektromotoren benötigt dieser Motor keine Wicklungen. Er ist daher konstruktiv einfach und kompakt. Vorteile solcher Motoren bestehen auch in der Möglichkeit, ohne Getriebe hohe Drehmomente bei anwenderfreundlichen niedrigen Drehzahlen zu erzeugen, ihrem geringen Gewicht, einer hohen Energiedichte sowie einem hohen Haltemoment im passiven Zustand.

Bei dem bekannten Ultraschallmotor enthält der Schwingstator eine Anzahl kreisringförmig angeordneter Piezokeramik-Segmente, die mit Elektroden versehen und mit dem eigentlichen Schwingkörper verklebt sind. Die Schwingungsanregung erfolgt über den umgekehrten piezoelektrischen Effekt, wonach beim Anlegen einer elektrischen Spannung an einem polaren Ionenkristall der Kristall eine Formänderung erfährt. Zwei Arbeitselektroden zur einer Seite der Piezokeramik bilden mit dem metallischen Schwingkörper, der zur anderen Seite der Piezokeramik als Gegenelektrode wirkt, zwei getrennte Anregesysteme. Unter jeder der Arbeitselektroden befinden sich in der Keramik wechselweise unterschiedlich polarisierte Bereiche, die im weitesten Sinne mit der Polteilung konventioneller Motoren vergleichbar sind. Diese Polarisationsstruktur der Keramik entspricht der Struktur der im elastischen Körper angeregten Wanderwellen, deren Stehwellen-Komponenten in den Bereichen Knotengeraden aufweist, in denen unterschiedlich polarisierte Segmente der Keramik der Länge $\lambda/2$ ($\lambda$ = Wellenlänge der Wanderwelle) aneinandergrenzen. Durch die gewählte Polarisationsstruktur der Keramik wird also die Anzahl der Knotengeraden der angeregten Wanderwelle festgelegt. Der bekannte Ultraschallmotor wird daher stets mit einer Wanderwelle mit einer festen Anzahl von Knotengeraden angetrieben. Dies führt zu einer Einschränkung der Steuerbarkeit dynamischer Eigenschaften des Motors, wie Drehgeschwindigkeit und Drehmoment, die u.a. abhängig sind von der Anzahl der Knotengeraden.

Aus der DE-OS 39 27 040 ist bereits bekannt, zur Anregung von Wanderwellen mit einer unterschiedlichen Anzahl von Knotengeraden mehrere Schichten von Ultraschalloszillatoren mit jeweils unterschiedlicher Polarisationsstruktur zu verwenden.

Aus der EP-A-0413111, den PATENT ABSTRACTS OF JAPAN vol. 14, no. 401 (E-971), 30. August 1990 und JP-A-2-151 278 sowie der US-A-4 562 374 sind bereits Anordnungen von Aktoren auf einem rotationssymmetrischen Schwingkörper bekannt, die jedoch nicht mit einer variablen Anzahl von Knotengeraden betrieben werden.

Aufgabe der Erfindung ist die Schaffung eines Verfahrens zum Betrieb von Wanderwellenmotoren mit einem rotationssymmetrischen Schwingkörper. Die Lösung dieser Aufgabe erfolgt gemäß den Merkmalen des Patentanspruchs 1. Vorteilhafte Ausgestaltungen und Weiterbildungen der Erfindung sind in den Unteransprüchen enthalten.

Mit dem erfindungsgemäßen Verfahren erfolgt eine Abkehr von den bisher in solchen Motoren verwendeten Anregungsverfahren. Die Erfindung beruht auf der Idee, zur Anregung der Wanderwelle im wesentlichen lokale, nahezu punktförmige Aktorelemente zu verwenden, die so angeordnet sind angesteuert werden, daß gezielt bestimmte Sinus- bzw. Cosinuskomponenten der Eigenschwingungen des Schwingstators angeregt und zu Wanderwellen (mit vorbestimmter Anzahl von Knotengeraden) überlagert werden. Je kleiner die Anregungsfläche der Aktoren ist, desto kleiner ist die anregbare Wellenlänge.

Mit dem erfindungsgemäßen Verfahren ist es möglich einen Wanderwellenmotor leicht auf unterschiedliche Betriebsanforderungen einzustellen, da die Leerlauf-Drehzahl und die Drehzahl-Drehmomentcharakteristik von Wanderwellenmotoren direkt von der zum Betrieb verwendeten Schwingungsform, insb. der Anzahl der Knotengeraden, abhängt. Eine Kennlinienwandlung erfolgt sehr einfach dadurch, daß zwischen Wellenformen mit unterschiedlichen Knotengeraden gewechselt wird. Dies ist auch unter Last möglich. Fertigungstechnisch ergibt sich der Vorteil, daß statt der herkömmlicherweise erforderlichen kreisringförmigen Schichten von Piezokeramik oder ähnlichen Ultraschalloszillatoren, lediglich in wesentlichen lokale Aktoren mit dem Schwingkörper des Stators gekoppelt werden müssen.

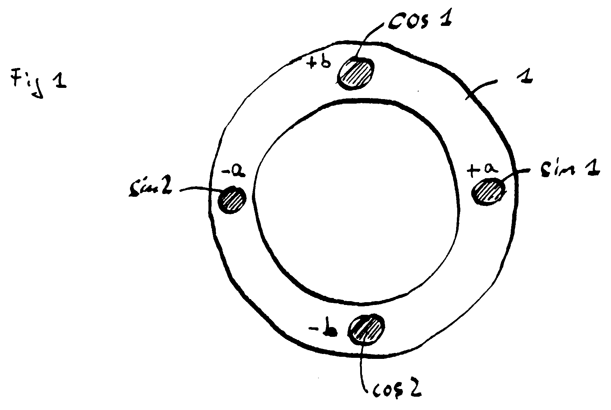

Figur 1 zeigt eine schematische Darstellung eines Motors mit zwei Aktorpaaren.

Bei Figur 1 ist schematisch ein Motor dargestellt, der mit Schwingungsformen mit einer beliebigen ungeraden Anzahl von Knotengeraden betrieben werden kann. 1 bezeichnet dabei einen kreisförmigen Schwingkörper aus elastischem Material. Die Erfindung ist jedoch nicht auf kreisringförmige Schwingkörper beschränkt, sondern umfaßt sämtliche rotationssymmetrische Schwingkörperformen. Cos 1, Cos 2, Sin 1, Sin 2 bezeichnen lokale, im wesentlichen punktförmige Aktorelemente. Diese Aktorelemente können als piezokeramische, magneto- oder elektrostriktive Dehnkörper, die kraftschlüssig mit dem Schwingkörper 1 verbunden sind, oder Linearelemente ausgeführt werden (hierzu wird auf die gleichzeitig eingereichte Anmeldung "Ultraschallwanderwellenmotor mit formschlüssiger Anregung von Wanderwellen" verwiesen). Die Bezeichnung Cos bzw. Sin der Aktorpaare deutet an, daß mit dem betreffenden Elementen jeweils Cosinus- bzw. Sinus-Stehwellen angeregt werden. Die Elemente Cos 1 und Cos 2 sind bei $\phi = 0$ bzw. $\phi = \pi$, die Elemente Sin 1 und Sin 2 bei $\phi = \pi/2$ bzw. $\phi = 3/2\,\pi$ angeordnet. Die Vorzeichen +, - bei den Anregungsamplituden a und b deuten an, daß die Einzelelemente der Elementenpaare bei dieser Ausführungsform im jeweils entgegengesetzten Sinne wirken. Zur Erzeugung von Wanderwellen durch Überlagerung von Stehwellen wird wie beim konventionellen Wanderwellenmotor das Elementenpaar Cos 1, Cos 2 mit einer relativen zeitlichen Phasenverschiebung von $\tau/4$ ($\tau$ = Periode der Schwingung) gegenüber dem Elementenpaar Sin 1, Sin 2 angesteuert.

Im folgenden wird erläutert, wie mit der Anregungsstruktur gemäß Figur 1 Wellenformen mit variabler Anzahl von Knotengeraden bei rotationssymmetrischen Schwingkörpern angeregt werden können. Wanderwellenmotoren werden in der Nähe der Resonanzfrequenzen des elastischen Schwingkörpers des Stators betrieben. Diese Resonanzfrequenzen hängen abgesehen von den Materialkonstanten im wesentlichen von der Form, insbesondere den Symmetrie-Eigenschaften des Schwingkörpers ab. Sie können als Eigenwerte der Bewegungsgleichung für Biegeschwingungen erhalten werden. Die Gleichung, die näherungsweise die ungedämpften Biegebewegungen einer Platte beschreibt, ist in der DE-OS 39 27 040 angegeben. Die zu den Eigenfrequenzen (Resonanzfrequenzen) eines rotationssymmetrischen Schwingkörpers gehörenden linear unabhängigen Eigenschwingungsformen (Stehwellen) sind durch

$$W_{m,n}(r,\phi) = R_m(r)sin(n\phi) \text{ bzw. } W_{m,n}(r,\phi) = R_m(r)cos(n\phi)$$

gegeben, wobei die Zeitabhängigkeit abgespalten und zur Normierung max. $W_{mn}(r,\phi) = 1$ gesetzt wurde. Diese Eigenschwingungsformen sind zueinander orthogonal. Der Index m gibt die Anzahl der Knotenkreise an und wird hier nicht weiter betrachtet; n bezeichnet die Anzahl der Knotengeraden; r, $\phi$ sind Polarkoordinaten. Die Gerade $\phi = 0$ kann infolge der Rotationssymmetrie willkürlich festgelegt werden.

Die mit Hilfe von Aktoren erzeugte Anregung des Schwingkörpers sei in ihrer Orts- und Winkelabhängigkeit mit Q (r, $\phi$) bezeichnet. Ein Maß für die Stärke der Anregung einer gegebenen Eigenschwingungsform durch die Anregung Q (r, $\phi$) ist durch das Skalarprodukt

$$I_{m,n} = \int_0^{r_a} \int_0^{2\pi} W_{m,n}(r,\phi)Q(r,\phi)rdrd\phi$$

gegeben. Die Struktur der oben angegebenen Eigenschwingungsform ermöglicht die Abspaltung des Ortsanteils des Skalarproduktes $I_{mn}$. Der verbleibende winkelabhängige Teil des Skalarproduktes $I_{mn}$ enthält den Teil der Eigenschwingungsform, der die Anzahl der Knotengeraden bestimmt. Bezeichnet man nun die Winkelabhängigkeit der Anregung mit q ($\phi$), ergibt sich als winkelabhängiger Teil des Skalarproduktes, d.h. der Anregungsstärke, für die Sinus-Schwingungsform der Fourier-Koeffizient

$$i_n = \int_0^{2\pi} q(\phi)sin(n\phi)d\phi$$

und für die Cosinus-Schwingungsform der Fourier-Koeffizient

$$j_n = \int_0^{2\pi} q(\phi)cos(n\phi)d\phi$$

Falls die Anregung durch K lokale, im wesentlichen punktförmige Aktorelemente erfolgt, gilt für den winkelabhängigen Teil der Anregungsfunktion

$$q(\phi) = \sum_{k=1}^{K} a_k\delta(\phi - \phi_k)$$

und die Fourier-Koeffizienten ergeben sich zu

$$i_n = \sum_{k=1}^{K} a_k sin(n\phi_k)$$

bzw.

$$j_n = \sum_{k=1}^{K} a_k cos(n\phi_k).$$

wobei $a_k$ die Amplitude der Anregung beim Winkel $\phi_k$ bezeichnet. Eine optimale Anregung bei vorgegener Anzahl von Knotengeraden und Aktorelementen erhält man durch Maximierung der Ausdrücke für $i_n$ und $j_n$.

Bringt man ein einziges Element bei $\phi = 0$ an, so lassen sich mit ihm bei allen Eigenschwingungsformen die Cosinus-Stehwellen anregen. Genauso lassen sich mit einem Element, das bei $\phi = \pi/2$ angeordnet ist, bei allen Eigenschwingungsformen mit einer ungeraden Anzahl von Knotengeraden die Sinus-Stehwellen anregen. Eine Anregung der Sinus-Stehwellen der Eigenschwingungsformen mit einer geraden Anzahl von Knotengeraden ist nicht möglich, da sich bei ihnen an der Stelle $\phi = \pi/2$ stets eine Knotenlinie befindet (Sinus(m $\pi$) = 0). Verwendet man zur Anregung ein Paar von Elementen, das bei $\phi = 0$ bzw. $\phi = \pi$ angeordnet ist, so lassen sich bei ihm die Cosinus-Stehwellen bei allen Eigenschwingungsformen mit einer geraden Anzahl von Knotenlinien anregen, wenn die beiden Elemente in gleichem Sinne wirken. Für die Sinus-Stehwellen gelten analoge Ergebnisse, wenn die Anregelemente um eine Viertelwellenlänge versetzt angeordnet werden. Beim Wanderwellenmotor ist jedoch die Anordnung der Anregeelemente fest vorgegeben, so daß nicht alle Sinus-Stehwellen angeregt werden können.

Einfache Ausführungsformen des erfindungsgemäßen Motors erhält man durch Anwendung der oben angegebenen Überlegungen für die Fälle von zwei Aktorelementpaaren.

Verwendet man zur Anregung ein Paar von Aktorelementen, die im entgegengesetzten Sinn wirken, und bei $\phi = 0$ und $\phi = \pi$ angeordnet sind, so lassen sich mit ihm die Cosinus-Schwingungsformen mit einer ungeraden Anzahl von Knotenlinien anregen. Dies folgt daraus, daß Cos $(0) = $ -Cos $[ (2m+1) \cdot \pi ]$. Entsprechend werden, wenn man die Aktorelemente zur Anregung bei $\phi = \pi/2$ und $\phi = 3/2\pi$ anordnet und wenn beide Elemente im entgegengesetzten Sinn wirken, die Sinus-Schwingungsform mit einer ungeraden Anzahl von Knotengeraden optimal angeregt.

Die neuartige Anregungsstruktur ermöglicht demnach bei dem erfindungsgemäßen Motor einen Betrieb mit einer beliebigen und variablen Anzahl von Knotengeraden. Da die Resonanzfrequenzen des Schwingkörpers (Eigenfrequenzen) - abgesehen von eventuellen zufälligen Entartungen - für verschiedene Anzahl von Knotengeraden unterschiedlich sind, kann die Auswahl der gewünschten Schwingungsform durch das Abstimmen der Anregefrequenz auf die jeweilige Resonanzfrequenz erfolgen. Hierzu werden die Aktoren mit einer harmonischen Wechselspannung gleicher Frequenz angesteuert. Die Anregung von Wanderwellen erfolgt dadurch, daß die Aktoren mit i. w. gleicher Frequenz, aber unterschiedlicher Amplitude und Phase angesteuert werden, wobei die relative Phasenverschiebung und das Amplitudenverhältnis der Anregespannungen zur Steuerung der Wanderwelle benutzt werden. Daneben kann durch Spannungsinvertierung das Umpolarisieren der Aktorelemente elektrisch erfolgen.

Schließlich sei noch darauf hingewiesen, daß es bei Motoren, die mit einer einzigen Eigenschwingungsform betrieben werden sollen, zweckmäßig ist, die Anregung in jedem Punkt der Statoroberfläche proportional zur Amplitude der benutzten Eigenschwingungsform zu setzen, da dann infolge der Orthogonalitätsbeziehungen der Eigenschwingungsformen nur die jeweils gewünschte Eigenschwingungsform angeregt wird.

## Patentansprüche

1. Verfahren zum Betrieb eines Wanderwellenmotors mit einem rotationssymmetrischen Schwingkörper aus einem elastischen Material, der mindestens zwei Aktoren zur Anregung von Wanderwellen in dem Schwingkörper sowie einen unter Druck mit dem Schwingkörper in Kontakt stehenden Rotor aufweist, dadurch gekennzeichnet, daß durch Aktoren eine im wesentlichen punktförmige, lokale Anregung zu Sinus- und Cosinus-Stehwellen in dem elastischen Material erfolgt, daß bei vorgegebener Anzahl $K_1$ und $K_2$ von Aktoren, die die Position der anregenden Aktoren bestimmenden Winkel $\phi_l$ und Anregungsamplituden $A_k/B_k$ der Aktoren so gewählt werden, daß die Summen

$$i_n = \sum_{K=1}^{K_1} A_k \sin(n\phi_k)$$

$$j_n = \sum_{K=1}^{K_2} B_k \cos(n\phi_k)$$

für beliebige vorgegebene ganze Zahlen n maximal sind, wobei n die Anzahl der Knotengeraden der jeweils anzuregenden Eigenschwingungsformen bezeichnet.

2. Verfahren nach Anspruch 1, dadurch gekennzeichnet, daß die Aktoren mit im wesentlichen gleicher Frequenz, aber unterschiedlicher Amplitude und Phase angesteuert werden, wobei die relative Phasenverschiebung und/oder das Verhältnis der Anregungsamplituden zur Steuerung der Wanderwelle benutzt werden.

3. Verfahren nach Anspruch 1 oder 2, dadurch gekennzeichnet, daß bei einem Wanderwellenmotor, bei dem ein erstes Aktorpaar vorgesehen ist, das bei $\phi = 0$ bzw. $\phi = \pi$ angeordnet ist, die Aktoren mit zueinander gegensinnigen Amplituden angesteuert werden und ein zweites Aktorpaar vorgesehen ist, das bei $\phi = \pi/2$ bzw. $\phi = 3/2\pi$ angeordnet ist und dessen Aktoren mit zueinander gegensinnigen Amplituden angesteuert werden.

4. Verfahren nach einem der Ansprüche 1-3, dadurch gekennzeichnet, daß die Aktoren so angesteuert werden, daß die Anregung in jedem Punkt der Statoroberfläche proportional zur Amplitude einer vorgegebenen Eigenschwingungsform des Schwingkörpers ist.

## Claims

1. Method of operating a travelling wave motor with a rotationally symmetrical oscillation body of an elastic material, which comprises at least two actuators for excitation of travelling waves in the oscillation body as well as a rotor standing in contact under pressure with the oscillatory body, characterised thereby that a substantially punctiform local excitation to sine and cosine waves in the elastic material is effected by actuators, that with a predetermined number $K_1$ and $K_2$ of actuators the angles $\phi_1$ determining the position of the exciting actuators and excitation amplitudes $A_k/B_k$ of the actuators are so selected that the sums

$$i_n = \sum_{K=1}^{K_1} A_k \sin(n\phi_k)$$

$$j_n = \sum_{K=1}^{K_2} B_k \cos(n\phi_k)$$

are maximum for any predetermined whole numbers n, wherein n denotes the number of the nodal lines of the respective natural forms of oscillation to be excited.

2. Method according to claim 1, characterised thereby that the actuators can be driven at substantially the same frequency but different amplitude and phase, wherein the relative phase displacement and/or the ratio of the excitation amplitude are used for control of the travelling wave.

3. Method according to claim 1 or 2, characterised thereby that in the case of a travelling wave motor in which a first actuator pair, which is arranged at $\phi = 0$ or $\phi = \pi$, is provided, the actuators with mutually opposite amplitudes are driven and a second actuator pair, which is arranged at $\phi = \pi/2$ or $\phi = 3/2\pi$ and the actuators of which with mutually opposite amplitudes are driven is provided.

4. Method according to claims 1 to 3, characterised thereby that the actuators are so driven that the excitation at each point of the stator surface is proportional to the amplitude of a predetermined natural form of oscillation of the oscillation body.

**Revendications**

1. Procédé pour faire fonctionner un moteur à ondes progressives possédant un corps oscillant à symétrie de révolution et fait d'un matériau élastique, qui comprend au moins deux acteurs pour exciter des ondes progressives dans le corps oscillant, ainsi qu'un rotor qui est en contact sous pression avec le corps oscillant, caractérisé en ce que des acteurs produisent une excitation locale essentiellement ponctuelle, donnant lieu à des ondes stationnaires sinus et cosinus dans le matériau élastique et que, pour des nombres $K_1$ et $K_2$ préfixés d'acteurs, les angles $\Phi_l$ déterminant la position des acteurs excitants et les amplitudes d'excitation $A_k/B_k$ des acteurs, sont choisis de manière que les sommes

$$i_n = \sum_{K=1}^{K_1} A_k \sin(n\phi_k)$$

$$j_n = \sum_{K=1}^{K_2} B_k \cos(n\phi_k)$$

soient maximales pour des nombres entiers n quelconques préfixés, n désignant le nombre de droites nodales des modes d'oscillation propres à exciter à chaque fois.

2. Procédé selon la revendication 1, caractérisé en ce que les acteurs sont attaqués ou commandés avec une fréquence qui est essentiellement la même, mais avec des amplitudes et des phases différentes, le déphasage relatif et/ou le rapport des amplitudes d'excitation étant utilisés pour commander l'onde progressive.

3. Procédé selon la revendication 1 ou 2, caractérisé en ce que, dans le cas d'un moteur à ondes progressives sur lequel on a prévu une première paire d'acteurs disposée à $\Phi = 0$ et $\Phi = \pi$ respectivement, les acteurs sont attaqués avec des amplitudes mutuellement de sens contraires et une seconde paire d'acteurs est prévue, qui est disposée à $\Phi = \pi/2$ et $\Phi = 3/2\pi$ respectivement et dont les acteurs sont attaqués avec des amplitudes mutuellement de sens contraires.

4. Procédé selon une des revendications 1 - 3, caractérisé en ce que les acteurs sont attaqués de manière que l'excitation dans chaque point de la surface statorique soit proportionnelle à l'amplitude d'un mode d'oscillation propre prédéterminé du corps oscillant.

Fig 1

cos 1

+b

1

sin 2

-a

+a

sin 1

-b

cos 2